Europäisches Patentamt

European Patent Office

Office européen des brevets

(19)

(11) Publication number: **0 123 743**
**B1**

(12)

# EUROPEAN PATENT SPECIFICATION

(45) Date of publication of patent specification: 29.06.88

(51) Int. Cl.⁴: **F 24 J 2/42**

(21) Application number: **83302416.9**

(22) Date of filing: **28.04.83**

(54) **Solar heating of water utilizing covering members.**

(43) Date of publication of application:
**07.11.84 Bulletin 84/45**

(45) Publication of the grant of the patent:
**29.06.88 Bulletin 88/26**

(84) Designated Contracting States:
**AT BE CH DE FR LI NL SE**

(56) References cited:
**DE-A-2 139 986**
**DE-A-2 552 559**
**FR-A-2 316 554**
**GB-A-1 597 459**

(73) Proprietor: SORENSEN, Jens Ole
P.O. Box 2274
Rancho Santa Fe, CA 92067 (US)

(72) Inventor: SORENSEN, Jens Ole
P.O. Box 2274
Rancho Santa Fe, CA 92067 (US)

(74) Representative: Wilson, Nicholas Martin et al
WITHERS & ROGERS 4 Dyer's Buildings Holborn
London EC1N 2JT (GB)

EP 0 123 743 B1

Courier Press, Leamington Spa, England.

## Description

The invention relates to solar heating of bodies of water which has its surface exposed to air and solar radiation, and specifically to an improved method and system wherein the surface of the water is covered in order to reduce heat absorbing evaporation of the water to the air.

Heretofore a thin film of oil has been suggested for covering bodies of water in order to reduce evaporation. Unfortunately, the oil is very polluting to the environment. For example, birds will get covered by the oil and die, and other organisms will be poisoned. Furthermore, the thin film of oil has very little insulating effect and heat escapes from the body of water to the air by simple heat conduction. It has also been suggested to cover the surface of the water with a thin film of plastic, but unfortunately it is very costly to repair the plastic film once it is ruptured and rain water has a tendency to collect on top of the plastic film, giving rise to problems of removing the rain water which, when evaporating, cools the body of water. In GB—A—1597459 there is disclosed an apparatus for extracting heat from solar energy comprising a plurality of rigid hollow members of predefined shape. However, in practice they do not fit together nor do they accommodate thermal expansion.

A method and system of heating bodies of water will be described which is not polluting to the environment, which insulates the body of water from the air in order to reduce heat loss, which is less costly to repair because it tends to repair itself and which does not collect water on its upper surface.

According to the present invention there is provided a barrier for reducing heat absorbing evaporation of water to air of a body of water which has its surface exposed to air whilst permitting heating thereof by solar radiation, said barrier comprising a floating blanket of a plurality of individual and discrete covering members which are each passable by at least some solar radiation characterised in that each covering member includes a fluid body and has a flexible wall and the covering members are applied to the surface of the water in a manner whereby each covering member presses against its neighbouring covering members and its flexible wall conforms to the shape of the contacting parts of the flexible walls of the neighbouring covering members. Preferably, each covering member is a sealed bag with its wall comprising a thin translucent film of plastic which encases a translucent liquid and a translucent gas. The liquid and the gas may conveniently be water and air respectively and the plastic may suitably be a polyolefine such as polyethylene or polypropylene. The covering members may be compartmented. Small amounts of surfactant may be added to the liquid in order to control condensation of vapor on the inside wall of the covering members. In order to prevent the wind from causing the covering members to accumulate at one end of the body of water, the blanket of covering members may be placed in separate frames in a floating framework. It is an advantage that the bottom of the body of water is of a dark colour, in order to maximize absorption and minimize the reflection of solar radiation. The invention also includes a method of solar heating utilising such a barrier. Further objects and advantages of my invention will become apparent from a consideration of the drawings and the description thereof.

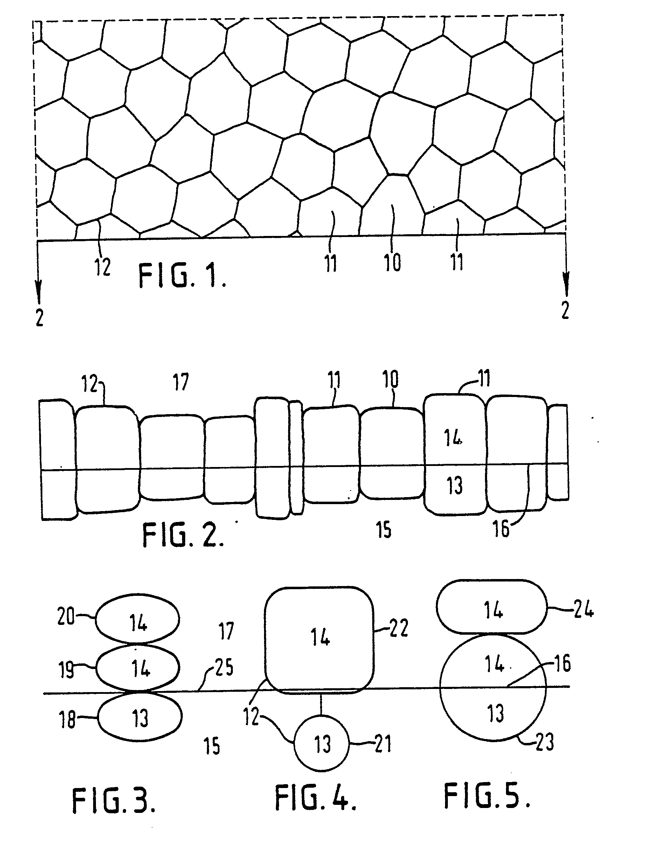

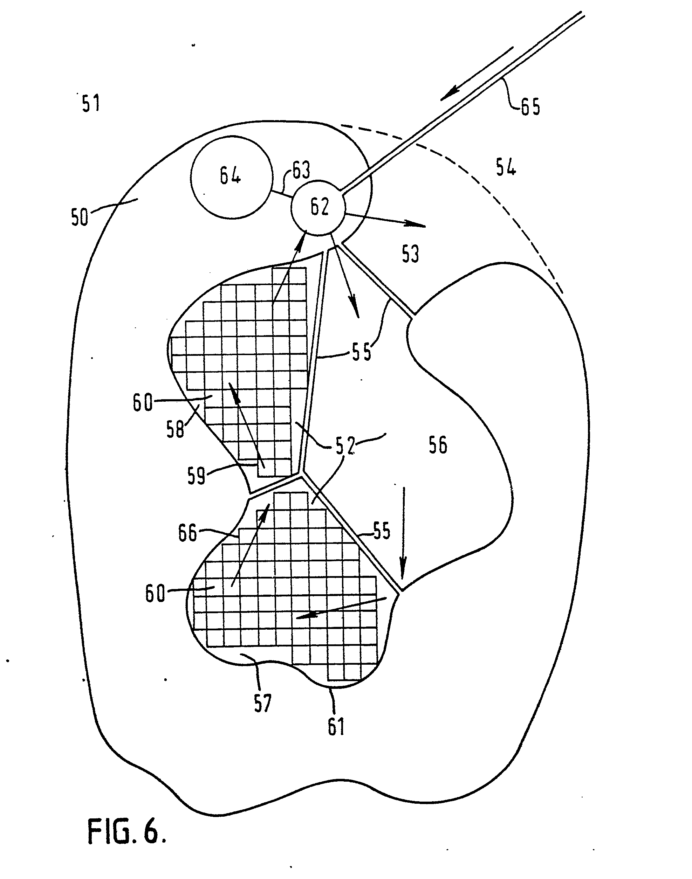

Figure 1 shows a segment of a blanket of covering members of a preferred embodiment of the invention seen from above. Figure 2 is a sectional view of Figure 1 taken through a plane indicated by section line 2—2 in Figure 1 seen from the side. Figures 3, 4 and 5 show alternative preferred embodiments of covering members of the invention seen from the side. Figure 6 is a schematic diagram which shows a body of water being heated by the sun utilising covering members and a floating framework of the invention seen from above.

Figures 1 and 2 show a segment of a barrier consisting of thousands of covering members 10 and 11 seen in Figure 1 from above and seen in Figure 2 from the side. Each covering member is a sealed bag with its wall 12 comprising a thin translucent film of polyethylene plastic which encases a translucent liquid of water 13 and a translucent gas of air 14. Each covering member 10 presses against its neighbouring covering members 11 whereby its thin flexible wall 12 conforms to the shape of the contacting part of the neighbouring covering members' thin flexible walls 12. Above the blanket of covering members 10 and 11 is air 17. The blanket of covering members 10 and 11 floats on a body of water 15. The surface of the body of water 15 and the surface 16 of the liquid of water 13 inside the covering members 10 and 11 are approximately at the same elevation. The liquid and the gas inside the covering member may be separated by a film of plastic at 16 to prevent condensation of liquid on the upper wall of the covering member.

The radiation from the sun, not shown, comes from above and passes through the blanket of covering members 10 and 11, since the gas of air 14 and the liquid of water 13 and the polyethylene plastic all are translucent. The radiation from the sun continues into the body of water 15 where it is converted into heat. Some of the radiation will strike the bottom of the water, now shown, which has a dark colour and the radiation will here be converted to heat, which will be transferred to the body of water 15 by conduction and convection. The blanket of covering members 10 and 11 reduces heat loss from the heated water 17. The continuous blanket of covering members reduces heat absorbing evaporation from the body of water 15 to the air 17, and thermally insulates the body of water 15 from the air 17, since the gas of air 14 inside the cover members 10 and 11 is a good heat insulator. All warm bodies radiate away energy, also the heated body of water 15 which radiates a low frequency infrared light, but since the wall of polyethylene plastic 12 is opaque to radiation of this frequency, this energy is trapped and returned to the body of water 15. In fact, the covering members act as a heat trap reducing all four types of heat losses, namely conduction, convection, evaporation and radiation. It is expected that the temperature would not be significantly reduced during the night when the water is more than one meter deep. It should be noted that substantial solar heating of water also will take place on a cloudy day.

In order to prevent algae and other biofouling organisms from growing on the cover meter, it is possible to add small quantities of a chemical such as copper sulfate to the plastic. A surfactant may be added to the liquid in order to control condensation of vapor on the inside wall of the cover member and a substance such as gelatine may be added to the liquid of water in order to increase the viscosity of the liquid, in order to decrease convection in the liquid and thereby decrease heat loss by such convection. Figure 3, 4 and 5 show alternative embodiments of the cover members. The cover member shown in Figure 3 consists of three separate compartments. The bottom compartment 18 is submerged below the surface of the water 25 and contains a liquid of water 13; the middle compartment 19 and the upper compartment 20 are floating and upheld in the air 17 and mainly above the surface of the water 25, and contain a gas of air 14. This embodiment of a cover member has a particularly high insulating effect since heat in order to escape from the body of water 15 will have to pass through all three compartments 18, 19 and 20.

The cover member shown in Figure 4 consists of two separate compartments. The bottom compartment 21 is submerged below the surface of the water and contains a liquid of water 13. The top compartment 22 is mainly in the air 17 floating on the body of water 15 and contains a gas of air 14. The bottom compartment 21 is connected to the top compartment 22 and its wall 12 encases the liquid of water 13 and the gas of air 14.

The cover member shown in Figure 5 consists of two separate compartments. The bottom compartment 23 floats in the body of water 15. Some of the compartment 23 is below the surface of the water 15 and some of the compartment 23 is in the air 17 above the surface 25 of the water 15. The surface 25 of the body of water 15 and the surface 16 of the liquid of water 13 inside the compartment 23 are approximately at the same elevation.

The top compartment 24 is elevated in the air 17 and contains a gas of air 14. This embodiment of a cover meter has a very high insulating effect since heat in order to escape from the body of water 15 will have to pass through the liquid of water 13 and the gas of air 14 on the bottom compartment 23, and the gas of air 14 at the top compartment 24.

Figure 6 illustrates how the solar heating of water utilizing cover members can be used to facilitate most of man's basic needs, such as power, fresh water, irrigation for agriculture, acquaculture, and chemicals such as fuel, fertilizer and purification of minerals.

Shown in Figure 6 is a tropical island in the ocean 51. In the interior of the island is a lagoon 52 which is connected to the ocean 51 through the opening 53. A coral reef 54 shields the opening 53 of the lagoon 52 from tall waves.

A number of dykes 55 have been built whereby the body of water in the lagoon has been divided into a number of basins: a basin 56 for aquaculture, a basin 57 for primary heating of water, and a basin 58 for secondary heating of water. In each of the basins for heating of water 57 and 58, is a floating framework 59 and 66 respectively, which provides separate frames 60 into which blankets of cover members are placed. The floating frameworks 59 and 66 are moored at many places to the bottom of the lagoon 52 and to the shoreline 61 of the lagoon 52 and the dykes 55.

Located near the basin 58 for secondary heating of water is a current state-of-the-art ocean thermal energy conversion system 62 as one of the systems described for example in the Proceedings of the Eighth Ocean Energy Conference held June 7—11, 1981 in Washington, D.C. The conversion system 62 is connected by electric cable 63 to chemical plant 64. Leading from a depth of approximately 1 km on the ocean bottom to the conversion system is a cold water pipe 65.

Cold water at a temperature of 6—7°C is pumped via the cold water pipe to the conversion system 62. During the conversion process the temperature of the water is increased to about 26°C at which temperature it enters the basin 56 for aquaculture. The nutrient-rich deep sea water can be used to produce seafood. As the water passes through the basin 56 for aquaculture, its temperature increases to about 29°C at which temperature it enters the basin 57 for primary heating of water. This basin is covered with a blanket of cover members of the type illustrated in Figure 2, the blanket of cover members placed in separate frames of a floating framework 66. As the water passes through this basin 57 for primary heating of water its temperature increases from about 29°C to about 40°C at which temperature it enters the basin 58 for secondary heating of water. This basin is covered with a blanket of cover members the type illustrated in Figure 5, the blanket of cover members is placed in separate frames of a floating framework 59. As the water passes through this basin 58 for secondary heating of water its temperature increases from about 40°C to 47°, at which temperature it again enters the conversion system 62. During the conversion process the temperature of the water decreases to about 17°C and is hereafter discarded to the ocean.

It is a common opinion that the investment cost of an ocean thermal energy conversion system is decreased by 8—25% for every 2°C that the difference in temperature of the two incoming streams of water is increased. Since the normal surface water temperature of the tropical ocean is about 27°C, the system of the invention would heat the water an additional 20°C and probably thereby make possible a reduction of the investment cost of the ocean thermal energy conversion system by about 60—70%. Since the cost of the invested capital of the ocean thermal energy conversion system accounts for nearly all the running expenses of the system, any saving in investment cost will decrease the cost of the produced power accordingly by about the same percentage. In the present embodiment the power is directed to a chemical plant 64 which converts ocean water to fresh water used for irrigation of local agriculture. The chemical plant 64 may also purify minerals, produce fertilizer and produce fuel for export purposes.

An ideally located island which advantageously would be able to utilize the coverites of this invention would be Grand Cayman in the Caribbean. The total required length of the cold water pipe would be less than 3 km; a lagoon of about 60 square kilometers is found on the northern part of the island which on the average is only 3 meters deep. Many other places in the world have swamps, lakes or lagoons which at present do not contribute to the economy of man, and which would be well suited for projects which would involve the heating of water.

## Claims

1. A barrier for reducing heat absorbing evaporation of water to air of a body of water which has its surface exposed to air whilst permitting heating thereof by solar radiation, said barrier comprising a floating blanket of a plurality of individual and discrete covering members which are each passable by at least some solar radiation characterised in that each covering member includes a fluid body and has a flexible wall and the covering members are applied to the surface of the water in a manner whereby each covering member presses against its neighbouring covering members and its flexible wall conforms to the shape of the contacting parts of the flexible walls of the neighboring covering members.

2. A barrier according to Claim 1, characterised in that the flexible wall of each covering member comprises a thin translucent plastic film, which encases a fluid body including a translucent liquid and a translucent gas.

3. A barrier according to Claim 2 characterised in that the gas comprises air.

4. A barrier according to Claim 2 or 3 characterised in that the liquid comprises water.

5. A barrier according to Claim 2, 3 or 4 characterised in that the plastic comprises a polyolefine such as polyethylene or polypropylene.

6. A barrier according to any one of the preceding claims characterised in that at least some of the covering members are compartmented.

7. A barrier according to any one of the preceding claims 2 to 6 characterised in that the gas, liquid and/or the plastic is a material which impedes the passage of low frequency infrared light, thereby reducing the escape of heat energy in the form of radiation from the body of water.

8. A barrier according to any one of the preceding claims, characterised by a floating framework of separate frames in which the covering members are positioned.

9. A barrier according to Claims 2 and 6 characterised in that the liquid is separated from the gas by a film of plastic.

10. A barrier according to Claim 2 characterised in that the liquid has a high enough viscosity to reduce heat convection of the liquid.

11. A system of thermal energy conversion comprising a body of water including a barrier according to any one of Claims 1 to 10.

12. A method of heating a body of water comprising the steps of

(a) applying to the surface of the water a plurality of individual and discrete covering members each passable by at least some solar radiation, and

(b) forming with said covering members a floating blanket which admits solar radiation to reach the water, reduces heat absorbing evaporation of the water to the air, and thermally insulates the water from the air characterised by the steps of

(c) providing each of the covering members with an included fluid body and a flexible wall, and

(d) causing the floating blanket to cover the surface of the water by applying the covering members to the surface of the water in a manner whereby each covering member presses against its neighbouring covering members and its flexible wall conforms to the shape of the contacting parts of the flexible walls of the neighbouring covering members.

13. A method of heating a body of water according to Claim 12, comprising applying to the surface of the water a barrier according to any one of Claims 1 to 10.

## Patentansprüche

1. Barrier zur Verminderung einer wärmeabsorbierenden Verdampfung von Wasser in die Luft aus einer Wassermasse, deren Oberfläche der Luft ausgesetzt ist, deren Ewärmung durch Sonnenstrahlung aber zugelassen ist, wobei die genannte Barriere eine schwimmende Abdekkung aus einer Vielzahl von individuellen und diskreten Abdeckelementen umfaßt, die alle wenigstens von etwas Sonnenstrahlung passierbar sind, dadurch gekennzeichnet, daß jedes Abdeckelement einen Fluid-Körper einschließt und eine flexible Wandung besitzt, und daß die Abdeckelemente der Oberfläche des Wassers in einer Weise zugeführt werden, daß jedes Abdekkelement sich an seine benachbarten Abdeckelemente anpreßt und seine flexible Wandung sich an die Form der berührenden Teile der flexiblen Wandlungen der benachbarten Abdeckelemente anpaßt.

2. Barrier nach Anspruch 1, dadurch gekennzeichnet, daß die flexible Wandung jedes Abdeckelements einen dünnen, lichtdurchlässigen Kunststoff-Film umfßt, der einen Fluid-Körper umschließt, der eine lichtdurchlässige Flüssigkeit und ein lichtdurchlässiges Gas enthält.

3. Barrier nach Anspruch 2, dadurch gekennzeichnet, daß das Gas aus Luft besteht.

4. Barrier nach Anspruch 2 oder 3, dadurch gekennzeichnet, daß die Flüssigkeit aus Wasser besteht.

5. Barrier nach Anspruch 2, 3 oder 4, dadurch gekennzeichnet, daß der Kunststoff aus einem Polyolefin wie Polyäthylen oder Polypropylen besteht.

6. Barrier nach einem der vorhergehenden Ansprüche, dadurch gekennzeichnet, daß wenigstens einige der Abdeckelemente abgeteilt sind.

7. Barrier nach einem der Ansprüche 2 bis 6, dadurch gekennzeichnet, daß das Gas, die Flüssigkeit und/oder der Kunststoff ein Material ist, das den Durchtritt von niederfrequentem Infrarotlicht behindert und dadurch das Entweichen von Wärme-Energie in Form von Strahlung aus der Wassermasse verringert.

8. Barrier nach einem der vorhergehenden Ansprüche, gekennzeichnet, durch ein schwimmendes Rahmenwerk aus getrennten Rahmen, in denen die Abdeckelemente positioniert sind.

9. Barrier nach Anspruch 2 und 6, dadurch gekennzeichnet, daß die Flüssigkeit von dem Gas durch einen Kunststoff-Film getrennt ist.

10. Barrier nach Anspruch 2, dadurch gekennzeichnet, daß die Flüssigkeit eine ausreichend hohe Viskosität besitzt, um die Wärmekonvektion der Flüssigkeit zu vermindern.

11. System zur thermischen Energie-Umwandlung, umfassend eine Wassermasse mit einer Barriere nach einem der Ansprüche 1 bis 10.

12. Verfahren zum Erwärmen einer Masse von Wasser, umfassend die Schritte

(a) Anbringung von einer Vielzahl von individuellen und diskreten Abdeckelementen, von denen jedes von wenigstens etwas Sonnenstrahlung passierbar ist, auf der Oberfläche des Wassers, und

(b) Bildung einer schwimmenden Abdeckung aus den genannten Abdeckelementen, die zuläßt, daß Sonnenstrahlung das Wasser erreicht, die die wärmeabsorbierende Verdampfung des Wassers in die Luft vermindert, und die das Wasser von der Luft thermische isoliert, gekennzeichnet durch die Schritte.

(c) Ausstattung jedes Abdeckelements mit einem eingeschlossenen Fluid-Körper und einer flexiblen Wandung,

(d) Veranlassung, daß die schwimmende Abdeckung die Oberfläche des Wassers bedeckt, indem die Abdeckelemente auf der Oberfläche des Wassers in einer Weise angebracht werden, bei der sich jedes Abdeckelement gegen seine benachbarten Abdeckelemente preßt und seine flexible Wandung sich an die Form der berührenden Teile der flexiblen Wände der benachbarten Abdeckelemente anpaßt.

13. Verfahren zum Erwärmen einer Masse von Wasser nach Anspruch 12, umfassend die Anbringung einer Barrier an der Oberfläche des Wassers nach einem der Ansprüche 1 bis 10.

**Revendications**

1. Barrière destinée à réduire l'évaporation -absorbant de la chaleur- de l'eau en air d'une masse d'eau dont la surface est exposée à l'air, tout en permettant le chauffage de l'eau par le rayonnement solaire, ladite barrière comprenant une couverture flottante constituée d'une pluralité d'éléments de couverture individuels et séparés qui laissent chacun passer au moins une partie du rayonnement solaire, caractérisée en ce que chaque élément de couverture comprend un corps de fluide et possède une paroi flexible, et en ce que les éléments de couverture sont appliqués sur la surface de l'eau d'une manière telle que chaque élément de couverture appuie sur les éléments de couverture qui lui sont voisins et que sa paroi flexible s'adapte à la forme des parties des parois flexibles des éléments de couverture voisins qui sont en contact avec elle.

2. Barrière selon la revendication 1, caractérisée en ce que la paroi flexible de chaque élément de couverture consiste en un mince film plastique translucide qui entoure un corps de fluide constitué d'un liquide translucide et d'un gaz translucide.

3. Barrière selon la revendication 2, caractérisée en ce que le gaz est de l'air.

4. Barrière selon la revendication 2 ou 3, caractérisée en ce que le liquide est de l'eau.

5. Barrière selon la revendication 2, 3 ou 4, caractérisée en ce que le plastique est un polyoléfine tel que du polyéthlène ou du polypropylène.

6. Barrière selon l'une quelconque des revendications précédentes, caractérisée en ce qu'au moins quelques-uns des éléments de couverture sont compartimentés.

7. Barrière selon l'une quelconque des revendications 2 à 6, caractérisée en ce que le gaz, le liquide et/ou le plastique est une substance qui empéche le passage de la lumière infrarouge de basse fréquence, réduisant ainsi la perte par la masse d'eau d'énergie thermique sous forme de rayonnement.

8. Barrière selon l'une quelconque des revendications précédentes, caractérisée par un structure flottante constitué de châssis séparés dans lesquels sont positionées les éléments de couverture.

9. Barrière selon les revendications 2 et 6, caractérisée en ce que le liquide est séparé du gaz par un film de plastique.

10. Barrière selon la revendication 2, caractérisée en ce que le liquide présente un viscosité suffisamment élevée pour réduire la convection thermique du liquide.

11. Système de conversion d'énergie thermique, comprenant une masse d'eau présentant une barrière selon l'une quelconque des revendications 1 à 10.

12. Procédé de chauffage d'une masse d'eau comprenant les étapes consistant

(a) à appliquer sur la surface de l'eau une pluralité d'éléments de couverture individuels et séparés qui laissent chacun passer au moins une partie du rayonnement solaire, et

(b) à former à l'aide desdits éléments de couverture une couverture flottante qui laisse le rayonnement solaire atteindre l'eau, qui réduit l'évaporation -absorbant de la chaleur- de l'eau dans l'air, et qui isole thermiquement l'eau de l'air, caractérisé par les étapes consistant

(c) à munir chacune des éléments de couverture d'une paroi flexible dans laquelle est contenue un corps de fluide, et

(d) à faire en sorte que la couverture flottante recouvre la surface de l'eau, en appliquant les éléments de couverture sur la surface de l'eau d'une manière telle que chaque élément de couverture appuie sur les éléments de couverture qui lui sont voisins est que sa paroi flexible d'adapte à la forme des parties des parois flexibles des éléments de couverture voisins qui sont en contact avec elle.

13. Procédé de chauffage d'une masse d'eau selon la revendication 12, comprenant l'application sur la surface de l'eau d'une barrière selon l'une quelconque des revendications 1 à 10.

FIG. 1.

FIG. 2.

FIG. 3.

FIG. 4.

FIG. 5.

FIG.6.